# EUROPEAN PATENT APPLICATION

(11) **EP 1 832 451 A1**
(43) Date of publication of application: **12.09.2007**
(21) Application number: 07003130.7
(22) Date of filing: 14.02.2007
(51) Int. Cl.: B60H 1/00, B60H 1/32

(54) **Vehicle with a refrigeration compartment comprising a cold plate refrigeration system**

(30) Priority: 10.03.2006 US 372506
(71) Applicant: International Truck Intellectual Property Company, LLC., Warrenville, IL 60555 (US)
(72) Inventor: Larson, Gerald, L., Fort Wayne IN 46804 (US)
(74) Representative: Kuhnen & Wacker

(57) **Abstract**

A vehicle integrated power and control strategy for cold plate refrigeration system for a mobile vehicle. The system is essentially a hybrid refrigeration system that includes a conventional cold plate cooling system as well as an onboard refrigeration system that will charge the cold plates when the plates lose some of their chilling capacity. The system requires minimum generator capacity because the onboard integrated system has a low power draw gradual starting compressor. When the vehicle is in use the compressor will only energize if the residual cooling effect diminishes from the plates, hence the hybrid effect. After the vehicle is returned to its home base, there is capacity to engage a shore power hookup and run the compressor from shore power.

## Description

### BACKGROUND

Commercial motor vehicles such as medium or heavy duty trucks at times are used to carry perishable items such as foods. One of the methods of keeping these perishable items fresh is by use of "Cold Plate" technology. "Cold Plate" refrigeration relies upon aluminum or other metal containers (cold plates) filled with a solution having a pre-determined freezing point. Prior to vehicle operation, typically overnight, the vehicle on-board refrigerant compressor is operated to bring the cold plates to a frozen condition. The vehicle then typically departs in the morning for its delivery rounds. The refrigerated cargo is maintained at a proper temperature until the cold plate solution thaws. Cold plate refrigeration is very reliable, energy efficient (since 115VAC or similar utility electricity is used), cost efficient, and capable of maintaining relatively precise temperature (ideal for milk and temperature sensitive foods) when compared to "conventional" vehicle refrigeration ("reefer") systems. The major limitation of the Cold Plate refrigeration system is the usable operational time: The available time for deliveries before the cold plate solution thaws ...typically limiting vehicle usage to a single shift operation.

The vehicle integrated power and control strategy for cold plate refrigeration system described in this patent provides cost efficient vehicle integrated power and controls to retain the cold plate solution freezing point indefinitely without excessive temperature deviations while allowing the use of cost effective and readily available 115VAC or similar "Shore Power" when the vehicle is not operational.

### SUMMARY

This invention relates to a vehicle integrated power and control strategy for cold plate refrigeration system for a mobile vehicle. The system is essentially a hybrid refrigeration system that includes a conventional cold plate cooling system as well as an onboard refrigeration system that will charge the cold plates when the plates loose some of their chilling capacity. The system requires minimum generator capacity because the onboard integrated system has a low power draw gradual starting variable speed compressor. When the vehicle is in use the compressor will only energize if the residual cooling effect diminishes from the plates, hence the hybrid effect. After the vehicle is returned to its home base, there is switching capacity to engage a shore power hookup and run the compressor from shore power or other fixed power supply.

### Drawings

Other objects and advantages of the invention will become more apparent upon perusal of the detailed description thereof and upon inspection of the drawings, in which:
Figure 1 is a block diagram of a vehicle integrated power and control strategy for cold plate refrigeration system made in accordance with this invention.
Figure 2 is a mobile vehicle with the vehicle integrated power and control strategy for cold plate refrigeration system shown in Figure 1 installed.

### Description of Invention

Refrigeration systems deployed in truck applications generally fall into three categories. The first category are those having refrigerant compressors powered by small diesel engines, typically for tractor-trailer applications where the trailer must be capable of free standing operation either through use of the small diesel engine or by connection to stationary shore power, typically from a 240 VAC, 60 Hz source.

The second category of truck refrigeration systems are those having refrigerant compressors powered by the vehicle prime mover engine, typically for Class 4, and 5 trucks. These are vehicles not equipped with trailers and not having free standing operational needs. For these applications, refrigeration is maintained by continuous operation of the vehicle engine. Operation from shore power is feasible with these units; however, most are not equipped with the option due to cost and weight concerns.

The third category of truck refrigeration systems are those on vehicles equipped with "cold plate" refrigerant systems. For these applications, the refrigerant system consists of aluminum containers filled with a solution designed to freeze at a specific (application directed) temperature. The "cold plates" are typically brought to their freezing temperature before the vehicle begins operation, and temperatures are well maintained until the latent heat of the solution is lost due to thawing of the frozen solution. The "cold plates" are generally designed for several hours of operation. By definition, vehicle power is not used; however, shore power is typically used to power an on-board refrigerant compressor to bring the "cold plates" to their intended freezing state.

Each system has advantages and disadvantages largely determined the range and scope of application for each. Some discussion of pros and cons is appropriate. Refrigerator systems powered by small diesel engines are self-contained and provide freestanding operation. However, the systems are expensive, add significant weight to the vehicle, have undesirable failure mechanisms (temperatures may depart from requirements without notification), and maintenance requirements differing from the truck maintenance cycle. Future needs present additional significant issues. These include fuel costs associated with small engine inefficiencies as well as emission control requirements indicating that small diesel engines will require exhaust after-treatment systems, further complicating cost and maintenance.

Vehicles having refrigerant "split systems" where the compressor is engine mounted are cost efficient when compared with systems using small diesel engines.
However, since the compressors are engine mounted, capacity limitations exist due to size limitations, system installations are complex, and similar failure mechanisms exist. With regard to future requirements, systems which require engine operation have will have significant disadvantage relative to fuel costs and anticipated idle reduction requirements.

Vehicles equipped with "cold plate" technology have obvious advantages with respect to on-board power, temperature control, and failure mechanisms. Looking ahead, these systems have potential significant advantages in the areas of fuel usage, emissions controls, and idle reduction. However, limitations in the operational cycle are a significant productivity disadvantage for a number of applications. The refrigeration system operates until thawing of the cold plate medium occurs, at this point shore power applied for a number of hours is necessary to restore the system. Cold plate systems are typically configured with on-board refrigerant compressors. These units are smaller than those used in split systems or diesel powered units. Compressor size is in the 1.5 HP range (corresponding to 1500 watts). Vehicle electrical power is not compatible since it is delivered at 14VDC and typically not having an excess capacity in the 1500-watt range.

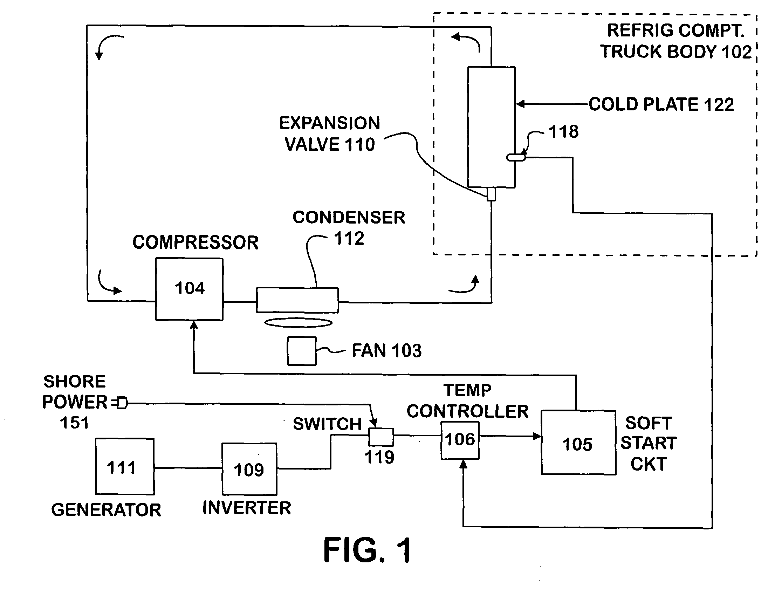

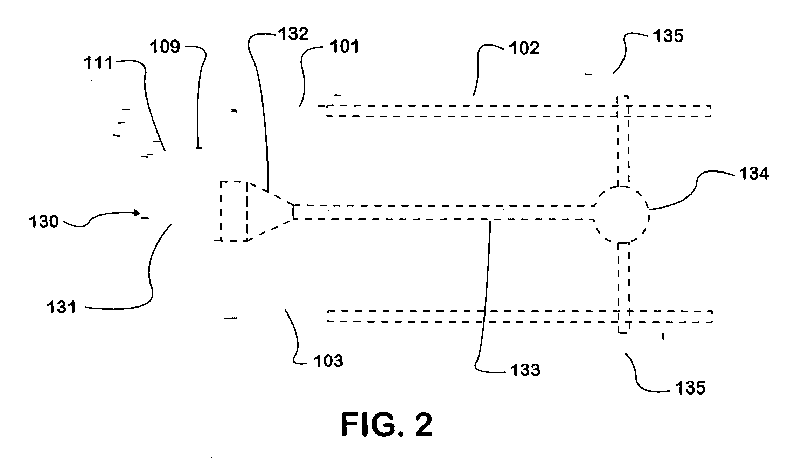

A vehicle with the vehicle integrated power and control strategy for cold plate refrigeration system installed is shown in Figures 1 and 2. A vehicle chassis 101 is engaged mechanically to an operator cab 103 for the driver and passengers. The vehicle chassis 101 may be for a medium or heavy duty truck, for example an ice cream or food delivery truck. The chassis 101 has an engine 131 for creation of mechanical power. The engine 131 is mechanically engaged to operate a direct current (DC) electrical generator 111. The generator 111 may be direct driven by the engine 131 or indirectly through a belt drive 130. This engine 131 is engaged to apply mechanical energy to the transmission 132 of the vehicle 101. The transmission 132 is mechanically engaged to a drive-line 133 that is in turn engaged to a driving axle 134 for operation of the vehicle wheels 135. The generator 111 is electrically engaged to an power converter, such as an inverter 109 for converting DC power to AC power.

The vehicle chassis 101 is engaged to a refrigeration compartment truck body 102. The refrigeration compartment truck body 102 is for the storage and transportation of perishable products such as food and dairy products. The refrigeration compartment 102 is insulated and is kept at a cool temperature by way of one or more cold plates 122. These cold plates 122 may be eutectic cold plates in one embodiment.
Eutectic cold plates contain a eutectic mixture, which is a mixture of two or more elements that has a lower melting point than of its constituents. A common eutectic mixture is a salt brine. The salt brine has a freezing point below 32 degrees Fahrenheit. Other eutectic mixtures may be anti-freeze and water. The cold plates 122 can be mounted on the refrigerated body ceiling and/or interior walls. During the day, the plates act like blue ice packs in a picnic cooler and absorb heat. In the prior art design, the compressor/condensing unit was plugged into shore power. Refrigerant passes through the plates refreezing the salt brine or other eutectic solution in approximately 8 hours. In the morning, the driver of the prior art system would unplug and the eutectic solution would lose heat as it melted over the day. In the vehicle 101 shown in Figures 1 and 2, the cold plate 122 may be cooled overnight via shore power energizing of the compressor and condensing unit or may be cooled during the day due to the onboard power system as described in the following paragraphs.

The onboard cooling system consists of a refrigeration loop that passes through the cold plate 122. Refrigerant that has boiled or expanded passing through or by the cold plate 122 exits the cold plate 122 and passes via piping or tubing to a compressor 104. The compressor 104 compresses the warm refrigerant and then it passes to a condenser 112. The refrigerant cools within the condenser 112 due to operation of the fan 103. The refrigerant then passes from the condenser 112 as a sub-cooled liquid to an expansion valve 110 on the inlet of the cold plates 122. As the refrigerant boils or expands past the cold plate 122, the cold plate cools and if an eutectic mixture is used, the eutectic mixture freezes. The area in the vicinity of cold plate 122 is contained and acts as a conventional evaporator or freezing unit. In fact the control scheme discussed below may also be used on a vehicle with continuous operation refrigeration system as described in paragraph [0008] above.

The compressor 104 may be operated through a soft start circuit 105 through which power passes. The soft start circuit 105 may start the compressor 104 on a lower voltage or a lower frequency. The voltage or frequency is slowly raised in order to increase compressor 104 speed to the point where the refrigeration cycle can commence to cool the cold plates 122. This soft start circuit 105 reduces starting current and the initial power draw that occurs with conventional compressors as they are started on shore power. The compressor 104 may be a variable speed compressor. Power may pass to the soft start circuit 105 and/or the compressor 104 from either shore power 151 (the conventional method) or from the engine 131 driven generator 111. The DC output of the generator 111 is converted to AC power in the inverter. Both the shore power 151 and the generator/inverter output are electrically engaged to a switch 119. The switch 119 may be manually operated to choose either shore power 151 or generator 111/inverter 109 input. In the alternative, the switch 119 may automatically apply the generator/inverter unless the shore power 151 is plugged in. The output of the switch 119, regardless of the input source, goes to a temperature controller 106 that feeds into the soft start circuit 105. The temperature controller 106 receives an input from a temperature sensor 118 inbedded in or in the vicinity of the cold plate 122. When the temperature sensor 118 indicates that the cold plate 122 temperature is rising, the temperature controller 106 energizes the soft start circuit 105 to energize the compressor 104 to initiate the refrigerant cycle to cool the cold plate 122.

Since electrical power is the product of voltage and current, sufficient power may generated by changing the excitation of the vehicle alternator to produce a higher voltage, and if the voltage is within the insulation capability of the alternator windings, then output current levels may be the maintained since wire gage and basic alternator design is unaffected. Operation with an output in the 50 volt range will allow delivery of approximately three times the power compared with that available at 14 VDC. The higher voltage output must then be converted into useful power: A voltage converter is necessary to deliver 14VDC for the truck electrical system, and an inverter 109 stage is needed to provide 115VAC, 60Hz power.

Compressor 104 operation and cold plate 122 temperature control for vehicle application are unique and discussed as follows. Compressor 104 starting is problematic since very high power levels are needed to overcome motor inrush current and to provide rotation sufficient to overcome refrigerant gas pressures. One solution is to use a high capacity inverter; for example, a 10KW machine to start a 1.5 HP compressor. This solution is not cost efficient since the excess capacity of the inverter is not used with the application. The preferred solution is to maintain the inverter output at an appropriate power level and add the "soft start" capability to the system where the soft start capability is used when operation is initiated to either to provide a lowered starting voltage (resulting in compressor motor slippage to produce increasing torque without high levels of initial power), or by maintaining the voltage level while providing a variable frequency output to the compressor motor, thus starting the motor with rated voltage at zero speed, then increasing speed at a rate which maintains power within the intended range of the inverter.

The soft start capability may also be used with shore power to allow compressor start-up using readily available 120VAC, 20 Amp electrical service, a very important factor in idle reduction. With the availability of on-board electrical power, cold plate temperature control presents unique opportunities. On-board power to operate the refrigerant compressor would be initiated to maintain cold plate temperature in a manner allowing the system to use the latent heat capability of the cold plate solution to best advantage. Cold plates would be equipped with temperature sensors located to sense the temperature of the medium. During typical operation, shore power is initially used to bring the medium to a frozen condition. The vehicle cold storage compartment is then loaded with refrigerated merchandise, and the truck is ready for operation.

The vehicle is then dispatched. The on-board compressor will not operate until the temperature sensor(s) indicate that the frozen cold plate solution has thawed. When this condition is achieved, compressor operation is initiated and continues until the temperature sensors indicate that the medium has been restored to a frozen condition. Hence, continuous operation of the compressor is unnecessary.

With the cold plate temperature control as described, a temperature hysterisis range must be established to accommodate the accuracy of the temperature sensors and to avoid compressor cycling while maintaining the refrigerated product within its necessary temperature range. For example, a cold plate medium having a freezing temperature of 20 Deg. F would be programmed to initiate compressor operation at 22 Deg. F with compressor operation terminated when the measured temperature decreases to 18 Deg. F.

For most applications, the described hysterisis control of compressor function is sufficient and cost effective. However, it is noted that with a variable frequency drive for the compressor motor, rotational speed could be established in a manner to simply maintain freezing temperature for the medium. The system as described has a two distinct advantages over conventional refrigeration Systems: (1) Product temperature is maintained by the freezing temperature of the cold plate medium, thus providing temperature accuracy (important to food quality) and avoiding failure and product spoilage in the event of control system or power failure. (2) System size and power requirements are smaller with better power (fuel economy) efficiencies than that achieved with conventional refrigeration. Cold plates allow the use of shore power for energy storage, cold plates are then sized for normal periods of operation with on-board power allowing extended operation when needed and allowing use of "ordinary" 115 VAC, 20 Amp shore power when the vehicle is away from its home base.

As described above, the vehicle integrated power and control strategy for cold plate refrigeration system of this invention and vehicle made with the system provide a number of advantages, some of which have been described above and others of which are inherent in the invention. Also modifications may be proposed to the vehicle integrated power and control strategy for cold plate refrigeration system of this invention and vehicle made with the system without departing from the teachings herein.

## Claims

1. A mobile vehicle, comprising:
a vehicle chassis engaged to an operator cab;
said vehicle chassis having an engine for creation of mechanical energy;
said engine being mechanically engaged to operate a direct current electrical generator engaged to said chassis;
said engine being engaged to apply mechanical energy to a transmission, and said transmission being mechanically engaged to a drive-line that is in turn engaged to a driving axle for operation of vehice wheels;
said generator being electrically engaged to a power converter for converting direct current power to alternating current power;
a refrigeration compartment truck body engaged to said chassis;
said refrigeration compartment truck body having at least one cold plate for mainenance of cooling in said refrigeration compartment;
an onboard refrigeration loop passing in the vicinity of and for cooling said cold plate;
said refrigeration loop having piping from an outlet of said cold plate and leading to an inlet of an alternating current powered compressor;
an output of said compressor passing to input of a condenser;
an output of said condenser leading to an inlet expansion mechanism of tubing in vicinity of said cold plate;
said compressor having electrical power supplied through a switch, said switch having an input from a shore power plug in connection and from said power converter output; and
said switch allowing one of either said shore power or said power converter output to provide electrical power for operation of said compressor.

2. The mobile vehicle of Claim 1, wherein:
said switch having an automatic mode that applies said converter output to power said compressor unless shore power is plugged in.

3. The mobile vehicle of Claim 2, wherein said power converter is an inverter for converting direct current power to alternating current power.

4. The mobile vehicle of Claim 1, wherein:
said compressor is operated through a soft start circuit through which power passes from said switch.

5. The mobile vehicle of Claim 4, wherein:
said soft start circuit starts said compressor on a reduced voltage and said soft start circuit slowly raises voltage in order to increase compressor speed to the point where a refrigeration cycle can commence to cool said cold plate.

6. The mobile vehicle of Claim 4, wherein:
said soft start circuit starts said compressor on a lower frequency and said soft start circuit slowly raises frequency in order to increase compressor speed to the point where a refrigeration cycle can commence to cool said cold plate.

7. The mobile vehicle of Claim 5, wherein:
a temperature controller controls said soft start circuit to start said compressor upon sensed changes in state within said cold plate; and
a temperature sensor in vicinity of said cold plates provides data for temperature controller start initiation logic to said soft start circuit.

8. The mobile vehicle of Claim 6, wherein:
a temperature controller controls said soft start circuit to start said compressor upon sensed changes in state within said cold plate; and
a temperature sensor in vicinity of said cold plates provides data for temperature controller start initiation logic to said soft start circuit.

9. A mobile vehicle, comprising:
a vehicle chassis engaged to an operator cab;
said vehicle chassis having an engine for creation of mechanical energy;
said engine being mechanically engaged to operate a direct current electrical generator engaged to said chassis;
said engine being engaged to apply mechanical energy to a transmission, and said transmission being mechanically engaged to a drive-line that is in turn engaged to a driving axle for operation of vehice wheels;
said generator being electrically engaged to a power converter for converting direct current power to alternating current power;
a refrigeration compartment truck body engaged to said chassis;
said refrigeration compartment truck body having at least one cold plate for mainenance of cooling in said refrigeration compartment;
an onboard refrigeration loop passing in the vicinity of said cold plate;
said refrigeration loop having piping from an outlet of said cold plate and leading to an inlet of an alternating current powered compressor;
an output of said compressor passing to input of a condenser;
an output of said condenser leading to an inlet expansion mechanism of tubing in vicinity of said cold plate; and
said compressor having electrical power supplied from said power converter output.

10. The mobile vehicle of Claim 9, wherein:
said compressor is operated through a soft start circuit through which power passes from said power converter.

11. The mobile vehicle of Claim 10, wherein:
said soft start circuit starts said compressor on a reduced voltage and said soft start circuit slowly raises voltage in order to increase compressor speed to the point where refrigeration cycle can commence to cool said cold plate.

12. The mobile vehicle of Claim 10, wherein:
said soft start circuit starts said compressor on a lower frequency and said soft start circuit slowly raises frequency in order to increase compressor speed to the point where refrigeration cycle can commence to cool said cold plate.

13. The mobile vehicle of Claim 11, wherein:
a temperature controller controls said soft start circuit to start said compressor upon sensed changes in state within said cold plate; and
a temperature sensor in vicinity of said cold plates provides data for temperature controller start initiation logic to said soft start circuit.

14. The mobile vehicle of Claim 12, wherein:
a temperature controller controls said soft start circuit to start said compressor upon sensed changes in state within said cold plate; and
a temperature sensor in vicinity of said cold plates provides data for temperature controller start initiation logic to said soft start circuit.

15. A mobile vehicle, comprising:
a vehicle chassis engaged to an operator cab;
said vehicle chassis having an engine for creation of mechanical energy;
said engine being mechanically engaged to operate a direct current electrical generator engaged to said chassis;
said engine being engaged to apply mechanical energy to a transmission, and said transmission being mechanically engaged to a drive-line that is in turn engaged to a driving axle for operation of vehice wheels;
said generator being electrically engaged to a power converter for converting direct current power to alternating current power;
a refrigeration compartment truck body engaged to said chassis;
said refrigeration compartment truck body having an onboard refrigeration loop for maintenance of cooling in said refrigeration compartment;
said onboard refrigeration loop having piping from an outlet of a conventional evaporator and leading to an inlet of an alternating current powered compressor;
an output of said compressor passing to input of a condenser;
an output of said condenser leading to an inlet expansion mechanism of tubing in an inlet of said conventional evaporator;
said compressor having electrical power supplied from said power converter output; and
said compressor is operated through a soft start circuit through which power passes from said power converter.

16. The mobile vehicle of Claim 15, wherein:
said soft start circuit starts said compressor on a reduced voltage and said soft start circuit slowly raises voltage in order to increase compressor speed to the point where refrigeration cycle can commence to cool said cold plate.

17. The mobile vehicle of Claim 15, wherein:
said soft start circuit starts said compressor on a lower frequency and said soft start circuit slowly raises frequency in order to increase compressor speed to the point where refrigeration cycle can commence to cool said cold plate.

18. The mobile vehicle of Claim 1, wherein said compressor is a variable speed compressor.

19. The mobile vehicle of Claim 10, wherein said compressor is a variable speed compressor.
